# EUROPEAN PATENT APPLICATION

(11) **EP 1 732 317 A1**
(43) Date of publication of application: **13.12.2006**
(21) Application number: 05012184.7
(22) Date of filing: 07.06.2005
(51) Int. Cl.: H04N 5/63, H02M 3/335

(54) **Power supply arrangement**

(71) Applicant: TTE Germany GmbH, 78048 Villingen-Schwenningen (DE)
(72) Inventor: Hermann, Wolfgang, 78144 Tennenbronn (DE); Louvel, Jean-Paul, 78086 Brigachtal (DE); Meitzner, Michael, 78052 VS-Pfaffenweiler (DE)
(74) Representative: Arnold, Klaus-Peter

(57) **Abstract**

A power supply arrangement comprises a mains connection (NA) and a switched-mode power supply with a transformer (TR2), a switching transistor (T1) on a primary side and an off-switch (S1), which switches the power supply arrangement off. The off-switch (S1) is coupled on a secondary side of the switched-mode power supply and controls the switching transistor (T1) via galvanic separation elements along two paths.

## Description

### BACKGROUND OF THE INVENTION

### FIELD OF THE INVENTION

The present invention is related to a power supply arrangement according to the preamble of claim 1. Power supply arrangements of this kind are used for example in television sets, satellite receivers or video-recorders.

### DESCRIPTION OF THE PRIOR ART

A power supply arrangement, namely a circuit arrangement, which comprises a mains connection NA, an off-switch, namely a mains switch S1, a power factor coil NS and a switched-mode power supply, is already known from WO 03/052908. The power factor coil NS is used to improve the power factor of the switched-mode power supply. The switched-mode power supply has a rectifier means BR, an energy-storage capacitor C1 and a mains switched-mode circuit with a transformer TR, a switching transistor T1 and a driver circuit DC. The mains switch S1 has two switching contacts. The first switching contact is arranged between the mains connection NA and the rectifier means BR and decouples the mains connection NA from the circuit arrangement. The second switching contact is coupled to a supply voltage VCC or a control voltage DS for the driver circuit DC, and switches the control voltage DS for the switching transistor T1 off. The known circuit arrangement further comprises a relay or some other switching element, whose switching contact is arranged in parallel with the first switching contact. A rectified and filtered output voltage U2, from the switched-mode power supply, is applied to one connection E of a control coil ST of the relay in a way that the switching contact of the relay opens if the output voltage U2 falls. Furthermore the output voltage U2 is buffered and as a result, when the circuit arrangement is switched off the supply voltage VCC as well as the control voltage DS falls more rapid than the output voltage U2. The energy stored in the power factor coil NS is thus dissipated by the coil via the relay. As a result, the mains switch S1 is protected from accelerated aging caused by arcs, when it is switched off.

The switched-mode power supply of this reference has in particular a normal mode and a standby mode. In the standby mode the output voltage U2 on the secondary side is switched off.

A disadvantage of the known power supply arrangement are the costs for the relay and the mains switch, which have to be supplied in particular with a mains isolation.

### SUMMARY OF THE INVENTION

It is therefore desirable to develop a power supply arrangement according to the preamble of claim 1 with an off-switch, which lowers the cost. Such an off-switch must also ensure a minimal power consumption in an off-mode, including fail-cases.

According to the invention this can be achieved by the features of claim 1, namely by coupling the off-switch on a secondary side of the switched-mode power supply, in a way that the off-switch controls the switching transistor T1 via galvanic separation elements along two paths.

Possible advantageous developments of the invention are specified in the dependent claims.

By coupling the off-switch on the secondary side of the switched-mode power supply, a simple off-switch without mains isolation can be used. A further relay is not necessary. The cost of the switching means, for the off-switch as one only, is reduced. The off-switch can be used therefore in particular for replacing the mains switch in a television set.

The off-switch is coupled on the secondary side of the switched-mode power supply in a way that it controls the switching transistor, which is arranged on the primary side, via galvanic separation elements. I.e. the off-switch is connected with the switching transistor over galvanic separation elements. Such galvanic separation elements can be opto-couplers or transformers or relays.

By controlling the switching transistor along two paths and by switching off along two paths, the off-switch is connected with the switching transistor via two different connection lines. This ensures a necessary minimal power consumption in the off-mode, in particular below 15 Watts, as well as in fail-cases. Such a connection line can be a new one or a pre-existing one in the switched-mode power supply.

By decoupling a driver circuit for the switching transistor from its supply voltage, or by decoupling the transistor itself from the driver circuit, or by blocking the driver circuit at its regulation input, the off-switch preferably switches the switching transistor off and therefore the power supply arrangement.

The power supply arrangement can further comprise a standby circuit with a standby switching circuit, which decouples the driver circuit for the switching transistor from its power supply in standby mode. The standby circuit can be for example a switched mode power supply. The off-switch can be coupled in the standby circuit in such a way, that it blocks the standby switching circuit. As a result the off-switch causes to switch the switching transistor off as well as the standby circuit, for switching a respective appliance off.

### BRIEF DESCRIPTION OF THE DRAWINGS

The invention will be explained in more detail with regard to two preferred embodiments, which are illustrated in the figures. It shows:
- Figure 1:: a simplified circuit diagram of a power supply arrangement of the first embodiment and
- Figure 2:: a simplified circuit diagram of a power supply arrangement of the second embodiment.

### DETAILED DESCRIPTION OF A FIRST EMBODIMENT OF THE INVENTION

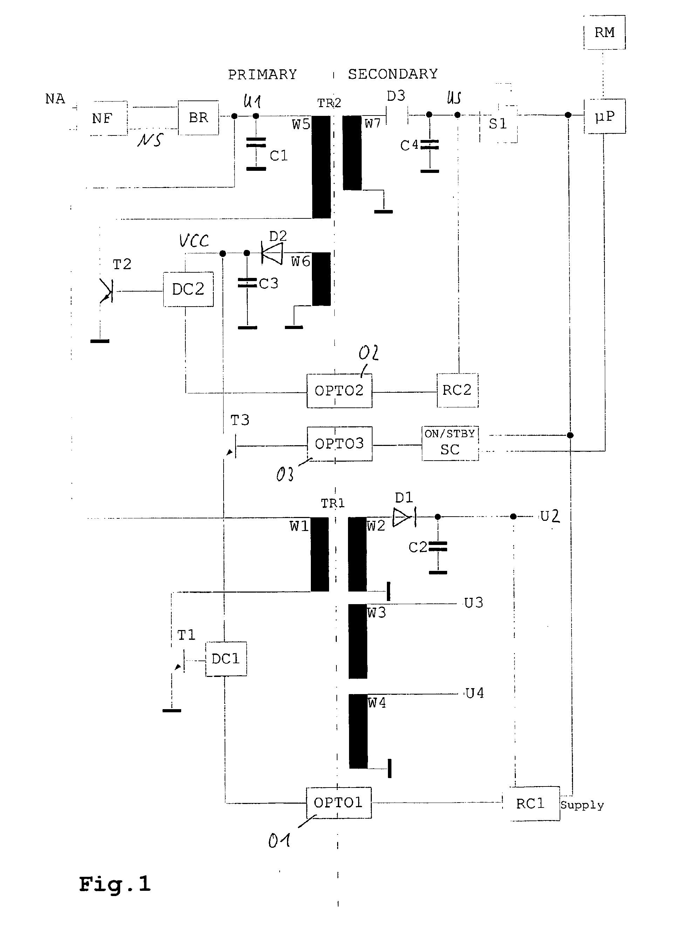

A power supply arrangement, shown in figure 1, comprises a mains connection NA, a power factor coil NS and a switched-mode power supply with a mains filter NF, a rectifier means, in this example a bridge rectifier BR, an energy-storage capacitor C1, a main switched-mode circuit and a standby circuit, and an off-switch S1. The standby circuit enables the switched-mode power supply to operate in normal mode or in standby mode.

The main switched-mode circuit comprises a transformer TR1 with a primary winding W1, arranged on the primary side, and three secondary windings W2, W3 and W4, arranged on the secondary side. The voltages generated over the windings W1, W2, W3 and W4 are called U1, U2, U3 and U4. The mains switched-mode circuit further comprises a switching transistor T1 and a driver circuit DC1, on the primary side, and a regulation circuit RC1 on the secondary side. The energy-storage capacitor C1 is arranged between the bridge rectifier BR and the primary winding W1 of the transformer TR1. The switching transistor T1, which is controlled by the driver circuit DC1, i.e. by a control voltage from the driver circuit DC1, is connected in series with the primary winding W1.

By sensing the output voltage U2 of the secondary winding W2, the regulation circuit RC1 is connected with the secondary winding W2 over a diode D1 and a capacitor C2. The output voltage U2 can for example have a voltage of 150 V and can be used as a system voltage in a television set. The regulation circuit RC1 is further connected with the driver circuit DC1 via an opto-coupler O1. As a result, a control signal generated in the regulation circuit RC1 is conducted to a regulation input of the driver circuit DC1.

The standby circuit comprises a standby switched-mode circuit which generates a supply voltage US, e.g. a DC voltage of 3,3 V. The standby switched-mode circuit has a transformer TR2, with a primary winding W5, and an auxiliary winding W6 generating a supply voltage VCC. Both windings are on the primary side. The transformer TR2 has a secondary winding W7, which generates the supply voltage US on the secondary side, a switching transistor T2 and a driver circuit DC2, both on the primary side, and a regulation circuit RC2 on the secondary side. The switching transistor T2, which is controlled by the driver circuit DC2, is connected in series with the primary winding W5. The auxiliary winding W6 is connected with the driver circuit DC2, over a diode D2 and a capacitor C3, and provides the supply voltage VCC for the driver circuit DC2.

By sensing the supply voltage US, i.e. the output voltage provided by the secondary winding W7, the regulation circuit RC2 is connected with the secondary winding W7 over a diode D3 and a capacitor C4. The supply voltage US is the supply voltage for both of the regulation circuits RC1 and RC2. The regulation circuit RC2 is further connected with the driver circuit DC2 via an opto-coupler 02. As a result, a control signal generated in the regulation circuit RC2 can be conducted to the driver circuit DC2.

The standby circuit further comprises a micro-processor µP and a standby switching circuit SC on the secondary side, and a switching transistor T3 on the primary side. The micro-processor µP is also provided with the supply voltage US of the winding W7 as its supply voltage. The micro-processor µP is controlled by a remote control RM and controls the standby switching circuit SC therefore. The switching transistor T3 is coupled with the driver circuit DC1. It is connected with the auxiliary winding W6 and the capacitor C3 for providing the supply voltage VCC to the driver circuit DC1. The switching transistor T3 is controlled by the standby switching circuit SC via an opto-coupler 03. As a result, the standby circuit decouples the driver circuit DC1 from its supply voltage VCC due to the switching transistor T3 in standby mode, for switching the voltage U2 off.

The off-switch S1 is coupled on the secondary side of the switched-mode power supply. In particularly the off-switch S1 is coupled in the standby circuit on the secondary side. The off-switch S1 is arranged for decoupling the supply voltage US from the micro-processor µP, from the standby switching circuit SC and from the regulation circuit RC1 of the main switched-mode circuit, when S1 is opened. The off-switch S1 does not decouple the supply voltage US from the regulation circuit RC2. As a result, the standby switched-mode circuit continues to work, when the off-switch S1 is opened, but the micro-processor µP and the main switched-mode circuit are off in this case.

The off-switch S1 is, along one path, connected with the primary side via a first connection line with the standby switching circuit SC and the opto-coupler 03, and along another path, via a second connection line with the regulation circuit RC1 and the opto-coupler O1. Since the standby switching circuit SC controls the transistor T3 and, as a result, controls the switching transistor T1, the off-switch S1, along the first path, controls the switching transistor T1. The first path goes via a galvanic separation element, namely the opto-coupler 03 of the first connection line.

Additionally since the regulation circuit RC1 controls the driver circuit DC1 and, as a result, also controls the switching transistor T1, the off-switch S1, along the second path, controls the switching transistor T1. The second path goes via another galvanic separation element, namely the opto-coupler O1 of the second connection line. Other galvanic separation elements such as transformers or relays can be used, instead of the opto-couplers O1, 02 and 03.

During operation, the off-switch S1 switches the transistor T1 off in the following two ways along the two paths:

By decoupling the standby switching circuit SC from its supply voltage US, the off-switch S1 blocks the standby switching circuit SC. The transistor T3 is not conductive when the standby switching circuit SC is blocked, which corresponds to the standby mode. The transistor T3 in the standby mode decouples the driver circuit DC1 from its supply voltage VCC. As a result, the off-switch S1 decouples the driver circuit DC1 from its supply voltage VCC and along the first path, switches the switching transistor T1 off.

By decoupling the regulation circuit RC1 from its supply voltage US, the off-switch S1 blocks the regulation circuit RC1. The regulation circuit RC1 stops generating a control signal and the regulation input for the control signal of the driver circuit DC1 is blocked. As a result, the off-switch S1 blocks the driver circuit DC1, due to its regulation input, and along the second path switches the switching transistor T1 off.

The two paths ensure that the transistor T1 is switched off even in a fail-case, for instance, if one of the galvanic elements is short-circuited. As an alternative, a second connection line could, for instance, be generated for providing a double of the first connection line, which is coupled in parallel to the first connection line.

### DETAILED DESCRIPTION OF A SECOND EMBODIMENT OF THE INVENTION

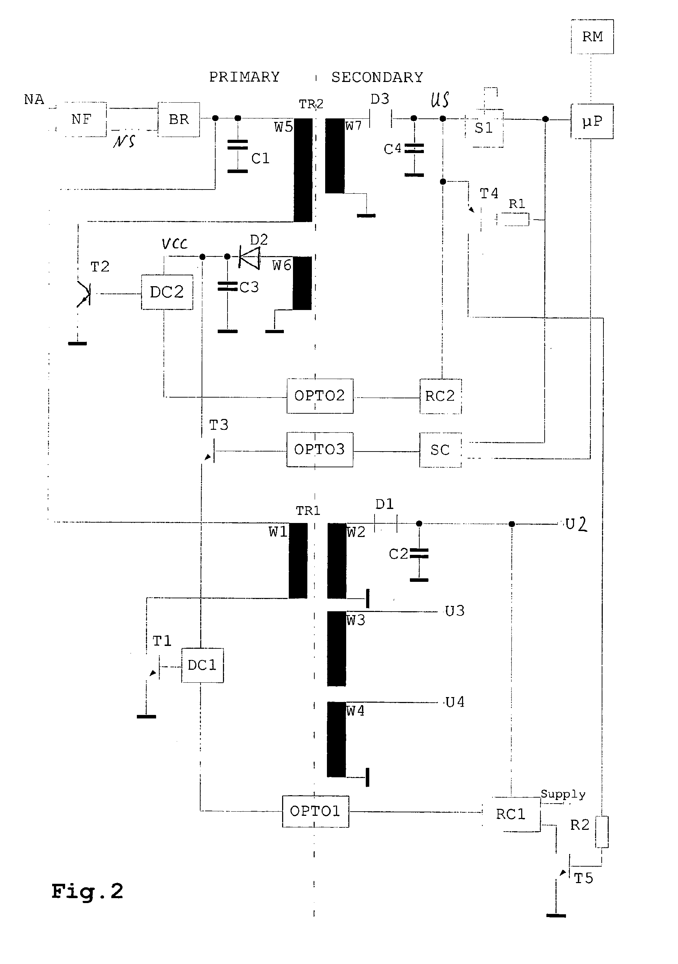

A power supply arrangement of a second embodiment, shown in figure 2, corresponds to a power supply arrangement of the first embodiment in all ways, except for the following features: The regulation circuit RC1 has its own supply voltage, the generation not being not shown. The standby circuit further comprises switching elements, which short-circuits the regulation circuit RC1 when the off-switch S1 is opened. The switching elements are two transistors, T4 and T5. The transistor T4 is a pnp-transistor. Its emitter is connected with the supply voltage US, which is generated in standby mode as well as in the normal operation mode. Its base is connected via a resistor R1 with the off-switch S1, such that the off-switch S1 is coupled between the emitter and the base. The transistor T5 is a npn-transistor. The base of the transistor T5 is connected via a resistor R2 with the collector of the transistor T4. Its collector is connected with the regulation circuit RC1 while its emitter is connected with ground.

By connecting the regulation circuit RC1 with ground, the transistor T5 short-circuits the regulation circuit RC1 while in operation. As a result, the regulation circuit RC1 stops working. The transistor T5 is controlled by the transistor T4 and is switched on, when the transistor T4 is switched on. The transistor T4 itself is switched on, when the off-switch S1 is switched off, i.e. when the off-switch S1 is opened. As a result, the off-switch S1 blocks the regulation circuit RC1 by short-circuiting it due to the switching elements, i.e. due to the transistors T4 and T5. As a further result, the off-switch S1, like in the first embodiment, blocks the driver circuit DC1 and switches the switching transistor T1 off.

## Claims

1. A power supply arrangement comprising
a mains connection (NA),
a switched-mode power supply with a transformer (TR1), a switching transistor (T1) on a primary side and an off-switch (S1) for switching the power supply arrangement off, **characterized in that**
the off-switch (S1) is coupled on a secondary side of the switched-mode power supply in a way that
it controls the switching transistor (T1) via galvanic separation elements along two paths.

2. The power supply arrangement according to claim 1, **characterized in that** the off-switch (S1) switches the switching transistor (T1) off by decoupling its driver circuit (DC1) from its supply voltage (VCC).

3. The power supply arrangement according to claim 1 or 2, **characterized in that** the off-switch (S1) switches the switching transistor (T1) off by blocking the regulation circuit (RC1).

4. The power supply arrangement according to one of the claims 1 to 3, **characterized in that** the off-switch (S1) switches the switching transistor (T1) off by blocking the driver circuit (DC1) at its regulation input.

5. The power supply arrangement according to claim 2, **characterized in that** the power supply arrangement comprises a power factor coil (NS) and
the switched-mode power supply comprises further a standby circuit with a standby switching circuit (SC), which decouples the driver circuit (DC1) from its power supply (VCC), and **in that** the off-switch (S1) blocks the standby switching circuit (SC).

6. The power supply arrangement according to claim 5 **characterized in that** the off-switch (S1) blocks the standby switching circuit (SC) by decoupling it from its supply voltage (US).

7. The power supply arrangement according to claim 4, **characterized in that** the off-switch (S1) blocks the driver circuit (DC1) by blocking the regulation circuit (RC1).

8. The power supply arrangement according to claim 7, **characterized in that** the off-switch (S1) blocks the regulation circuit (RC1) by decoupling it from its supply voltage (US).

9. The power supply arrangement according to claim 7, **characterized in that** the off-switch (1) blocks the regulation circuit (RC1) by short-circuiting it due to switching elements.

10. The power supply arrangement according to claim 9, **characterized in that** the switching elements comprise at least one transistor (T4), which is switched on, when the off-switch (S1) is switched off.
